# EUROPEAN PATENT SPECIFICATION

(11) **EP 1 532 954 B1**
(45) Date of publication and mention of the grant of the patent: **25.07.2007**
(21) Application number: 04027576.0
(22) Date of filing: 19.11.2004
(51) Int. Cl.: A61G 5/06, B62D 55/075, B62B 5/02

(54) **Device for handicapped people mobility**
Vorrichtung zur Erleichterung der Bewegung körperbehinderter Personen
Dispositif pour faciliter le déplacement des handicapés physiques

(30) Priority: 20.11.2003 IT NA20030069
(43) Date of publication of application: 25.05.2005
(73) Proprietor: Grosso, Raffaele, 80040 San Sebastiano al Vesuvio (Napoli) (IT)
(72) Inventor: Grosso, Raffaele, 80040 San Sebastiano al Vesuvio (Napoli) (IT)
(74) Representative: Strasser, Wolfgang

(56) References cited:
- DE-A1- 2 741 323
- GB-A- 441 047
- US-A- 4 473 234
- US-A- 4 585 241

## Description

The present invention relates to a structure for transporting invalids, injured people or handicapped people of the type which in this particular technical field is called "evacuation chair".

US-A-4473234 discloses a carriage for descending stairs carrying a person who is unable to walk. Said carriage is collapsible to be stored.

The market offers foldable structures for transporting invalids, injured people or handicapped people in emergency cases, which do not allow safe operation on stairs and highly inclined descending ramps. Furthermore, skilled operators are required for the handling of said known structures during transport, the folding thereof after use and unfolding before use.

The aim of the present invention is to overcome the above mentioned drawbacks.

This result has been achieved, according to the invention, by adopting the idea of making a structure for transporting invalids, injured people or handicapped people having the characteristics indicated in the claim 1. Further characteristics being set forth in the dependent claims.

The present structure makes it possible the safe transport of invalids, injured people or handicapped people even on highly inclined stairs and ramps, without any risk for the transported person. Furthermore, the present structure is apt be easily and quickly unfolded and easily handled and it is simple, cheap and reliable.

These and other advantages and characteristics of the invention will be best understood by anyone skilled in the art from a reading of the following description in conjunction with the attached drawings given as a practical exemplification of the invention, but not to be considered in a limitative sense, wherein:
- Fig.1 shows a structure according to the present invention, in the unfolded configuration, that is, ready to use;
- Fig.2 shows the lower base of the structure shown in Fig. 1;
- Fig.3 shows the above structure in the folded configuration;
- Fig.4 shows the above structure descending on a flight (for sake of clarity neither the transported person nor the operator who handles the structure are shown);
- Fig.5 shows the structure of Fig.4 on the footpace at the end of the flight;
- Fig.6 shows the structure during unfolding, i.e. during passage from the folded configuration of Fig.3 to the use configuration of Fig.1;
- Fig.7 is a detailed view of a brake.

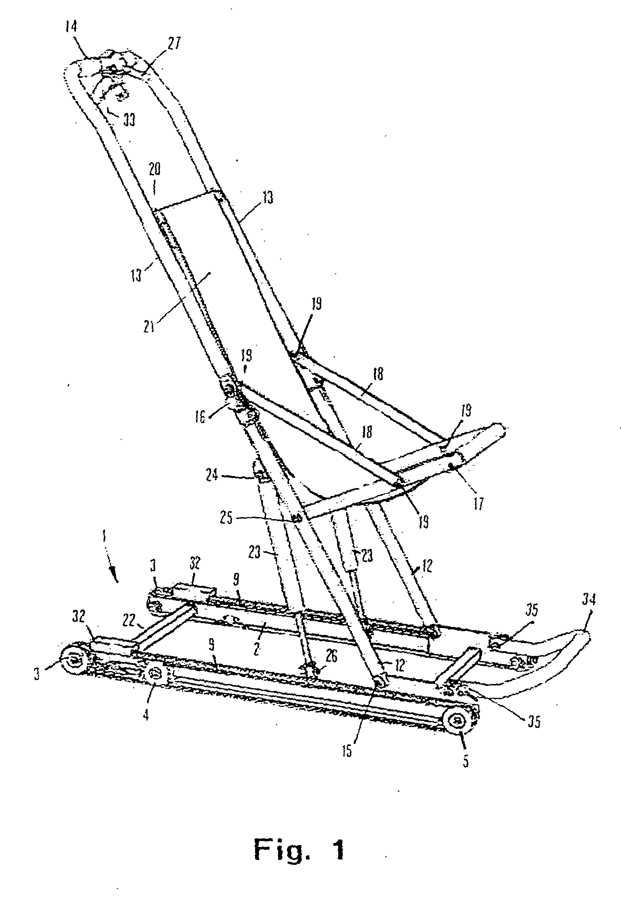

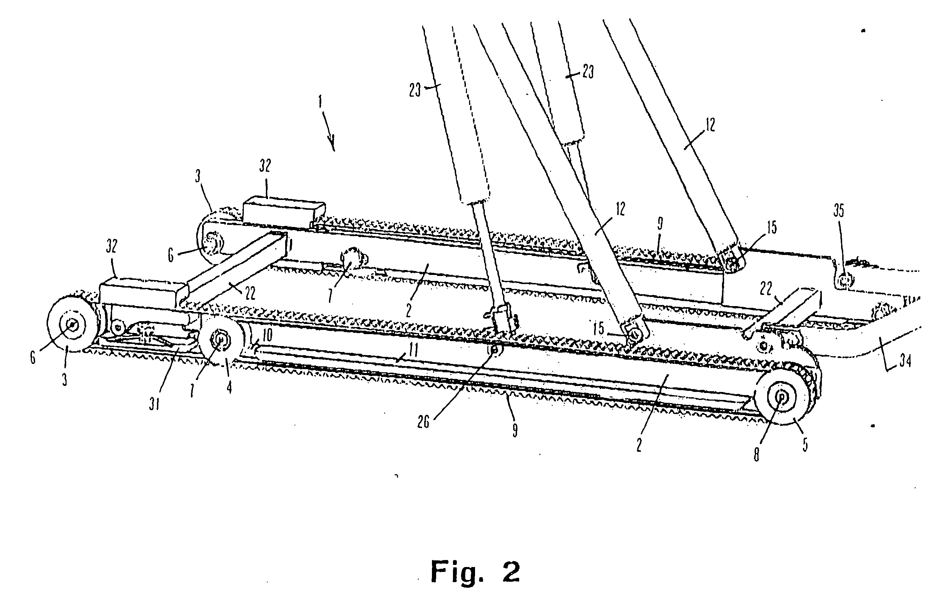

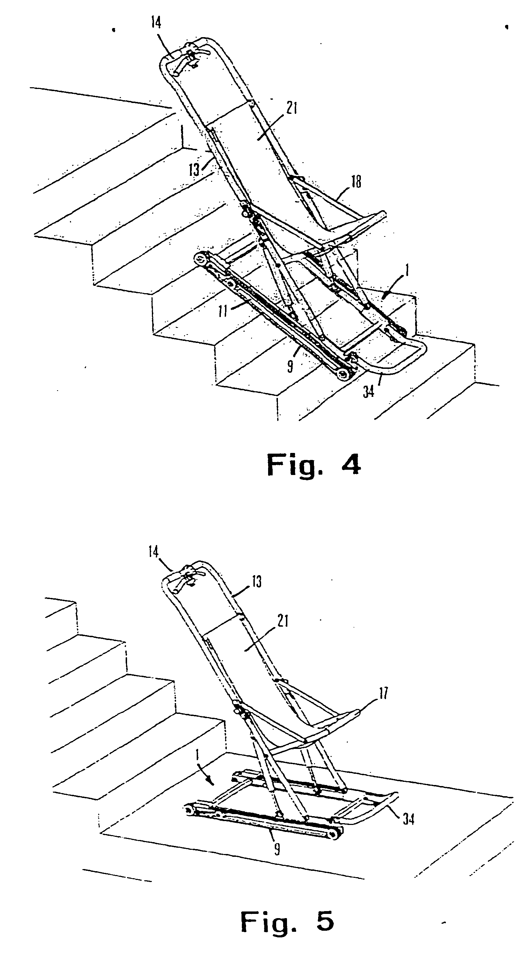

The foldable structure shown in figs. 1 to 7 has a base (1) with a two longitudinal elements (2) connected by two cross members (22), each of said longitudinal elements being provided with three pulleys (3, 4, 5). Each pulley (3, 4, 5) is mounted on a respective pin (6, 7, 8) which is fixed orthogonally to a respective longitudinal element (2) of the base (1). The pulleys (3, 4, 5) of each of said longitudinal element are mounted, free to rotate on their respective pins (6, 7, 8), are two end pulleys (3, 5) and an intermediate pulley (4). The end pulleys (3, 5) are identical to each other. The diameter of the intermediate pulley (4) is less than the diameter of the end pulleys (3, 5). A track (9) is mounted on the end pulleys (3, 5) of each pulleys triad. A belt (10) is wound on the intermediate pulley (4) and the front end pulley (5), said belt resulting within the ring delimited by the corresponding track (9). A longitudinal pad (11) is fixed to the respective longitudinal element (2) of the base, said pad exerting a pressure against the lower section of the belt (10). The pad (11) contributes to keep the track (9) in a flat configuration. The belt (10) results between the pad (11) and the track (9), therefore it is reduced the friction between these parts of the structure.

Hence, the base (1) is a base provided with tracks featuring a reduced advancing friction.

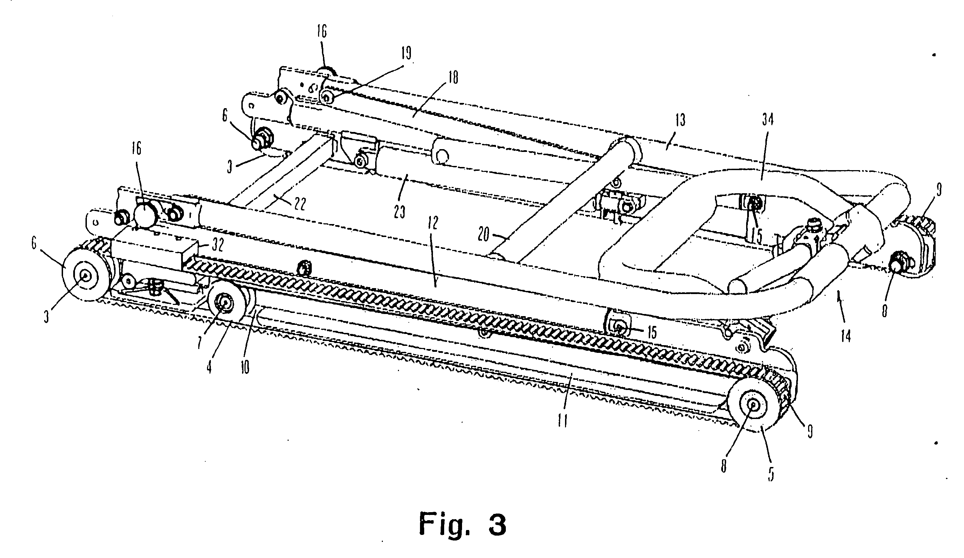

A superstructure is mounted on the base (1) in order to provide a seat for a sitting person to be transported. Said superstructure comprises two lower standards (12) and two upper standards (13), the upper standards being made by a single body having the shape of a reverse "U" the horizontal portion of which (14) defines a handle portion for the operator assisting the transported person. Each of the lower standards (12) of said superstructure is connected with a respective longitudinal element (2) of the base (1) by means of a transversal pin (15) at a point behind the front pulley (5).The lower standards (12) are connected with the upper standards (13) by means of two release knobs (16). In the configuration of Fig.1, each lower standard (12) is coaxial with the respective upper standard (13). In the configuration of Fig.3, each upper standard is parallel to the respective lower standard and the handle portion (14) results close to the front pulleys (5) of the base (1). The engagement of lower standards (12) with the upper standards (13) is released by pulling the knobs (16) outwardly. A tubular "U"-shaped body (17) is hinged to the lower standards (12) by means of transversal pins (25), said body being also connected with the upper standards (13) by means of two rods (18). On one end the two rods (18) are hinged, by means of transversal pins (19), to the tubular body (17), while on the other end said rods are hinged to the upper standards (13). A bar (20) is transversally positioned between the upper standards (13), below the handle (14). A length of textile material (21) is fixed to the tubular body (17) and to the bar (20), thus forming a seat and a seat back, wherein the seat is supported by the tubular body (17) and the back seat is supported by the bar (20) which is solid to the upper standards (13). For sake of clarity, the length of textile material (21) is shown only in Figs. 1, 4 and 5. The lower standards are further connected with the base (1) by means of two gas-loaded springs (23). The upper end of each gas-loaded spring (23) is connected with a respective lower standard (12) by means of a respective transversal pin (24), the lower end of each gas-loaded spring (being connected with a respective longitudinal element (2) of the base (1) by means of a further transversal pin (26). Pins (24) are more distant from the base (1) than pins (25) and pins (26) are in a rear position with respect to pins (15)'. The two gas-loaded springs (23) may be simultaneously released by means of a lever (27) positioned in correspondence of the handle (14). The connection between the lever (27) and the gas-loaded springs (23) is made by a double flexible cable (not shown in the drawings). By releasing the gas-loaded springs (23) it is possible to obtain the rotation of the lower standards (12) about the pins (15); it is thus possible to adjust the inclination of the seat back as needed and change the structure configuration from that shown in fig.1 to that shown in fig.3 (and vice versa).

Therefore, the above mentioned superstructure is a foldable superstructure, is connected with the tracked base (1) and may be oriented in such a manner to provide a variety of attitudes (as further described below).

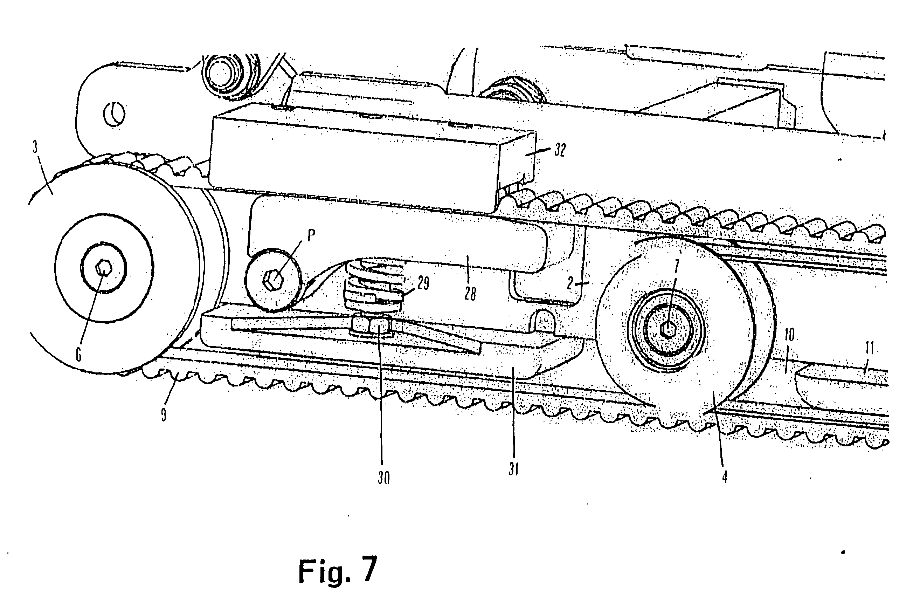

The tracks (9) are normally braked. For example, the braking system shown in Fig.7 may be used: for each track (9), the brake is positioned between the rear pulley (3) and the intermediate pulley (4) and it comprises a lever-shaped brake shoe (28) acting on the inner upper surface of the track, said brake shoe being pushed upwardly by a spring (29) whose load is easily adjustable by means of a screw nut (30) which is provided on a plate (31) solid to the respective longitudinal element (2) of the base (1). The brake shoe (28) is hinged to the element (2) at a point (P) behind the spring (29).Over the brake shoe (28) there is provided a block (32) solid to the same element (2), i.e. a fixed block, the position of which is such that the track (9) passes between the brake shoe (28) and the same block (32). The brake shoe (28) is connected with a braking lever (33) positioned on the handle (14). The connection between the brake shoe (28) and the braking lever (33) is ensured by a flexible cable (not shown in the drawings). As said before, the braking system is normally active (the spring 29 pushes the brake shoe 28 against the track 9), therefore the lever (33) provided on the handle (14) is a brake releasing lever.

Furthermore, the base (1) is provided with a footrest (34) made up by a tubular "U"-bended element which is connected with the front ends of the longitudinal elements (2) by respective transversal pins (35) and torsion springs (not visible in the drawings).

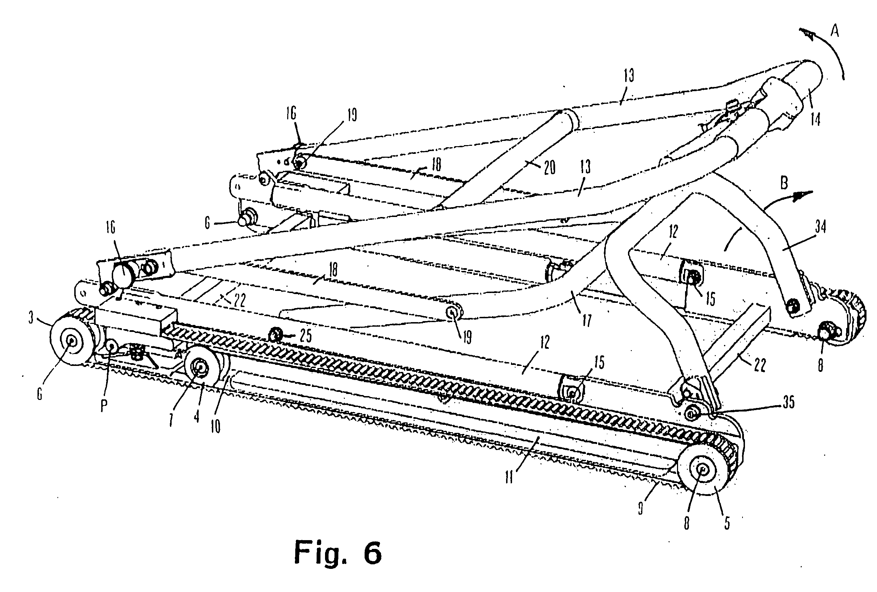

The change from the closed (Fig.3) to the use configuration (Fig.1) is obtained by acting on the lever (27) to release the springs (23), then the handle is raised (as shown by the arrow A in Fig.6), so that the standards (12, 13) of the superstructure are correspondingly raised. At the same time, the footrest (34) results automatically extracted (as shown by the arrow B in Fig.6) since it is pushed to rotate forwardly by the springs associated with the pins (35), the action exerted by the springs being no more opposed by the upper part (13, 14) of the superstructure (which in the folded configuration becomes the front part and results over the footrest). The orientation of the superstructure with respect to the base (1) is adjusted by means of the lever (27), in the sense that such orientation may be adjusted by keeping the springs (23) released. When the back seat is inclined as desired, the lever (27) is released and the springs (23) become locked, thus keeping the superstructure oriented exactly as desired. In order to transport a very heavy person or descending very inclined ramps, it may be convenient to move the back seat as backward as possible, i.e. keep the back seat as far as possible form the vertical position, so avoiding the risk of forward overturning of the structure with the transported person. The said adjustment may be operated also with the transported person seating on the structure.

As far as the handling of the structure is concerned, the brakes are released by acting on the lever (33) and the structure is pushed by the operator which holds the handle (14). The braking system is very smooth and it is very easy to use.

The change from the use to the closed configuration is obtained by pulling outwardly the knobs (16), thus disengaging the upper standards (13) from the lower standards (12), the springs (23) are released by means of the lever (27) and the handle (14) is pushed downwardly and forwardly, the footrest (24) being manually rotated backwardly before to complete this operation.

## Claims

1. Structure for transporting invalids, injured people or handicapped people comprising a base (1) provided with reduced advancing friction tracks (9) and by a superstructure which is mounted on the same base (1), is foldable, provides a seat for an invalid, injured or handicapped person to be transported, is apt to be positioned at a preset angle with respect to the base (1) and is firmly lockable in the chosen position, wherein said superstructure comprises two lower standards (12) and two upper standards (13), the upper standards being connected to each other by a horizontal segment constituting a handle (14) for the operator assisting the transported person, and in that
- each of said lower standards (12) is connected with a respective longitudinal element (2) of the base (1) by means of a transversal pin (15) positioned behind the front pulley (5);
- the lower standards (12) are connected with the upper standards by means of two release knobs (16);
- in the use configuration, each of said lower standards (12) is coaxial with the respective upper standard (13);
- in the folded or closed configuration, each of said lower standards (12) is parallel to the respective upper standard (13) and the handle portion (14) is close to the front pulleys (5) of the base (1);
- a tubular U-shaped body (17) is hinged to the lower standards (12), by means of transversal pins (25), said U-shaped body being also connected with the upper standards (13) by means of two rods (18);
- on one end said rods (18) are hinged, by means of transversal pins (19), to said tubular body (17) while on the other end said rods are hinged to the upper standards (13) ;
- a cross bar (20) is mounted between the upper standards (13) below the handle portion (14);
- a length of textile material (21) is fixed to the tubular body (17) and to the bar (20), thus forming a seat and a seat back, wherein the seat is supported by the tubular body (17) and the back seat is supported by the bar (20) which is solid to the upper standards (13);
- the lower standards (12) are further connected with the base (1) by means of two gas-loaded springs (23);
- each of said gas-loaded springs (23) is connected on one end with a respective lower standard (12) by means of a respective transversal pin (24) and, on the other end, with a respective longitudinal element (2) of the base (1) by means of a further transversal pin (26);
- pins (24) are more distant from the base (1) than pins (25) through which the tubular element (17) is connected with the lower standards (12), and pins (26) are in a rear position with respect to pins (15) through which the lower standards (12) are connected with the longitudinal elements (2) of the base (1);
- said gas-loaded springs (23) are simultaneously releasable by means of a lever (27) provided on said handle portion (14).

2. Structure according to claim 1 **characterized in that** said base (1) is made up of two longitudinal elements (2) connected to each other by two cross members (22), each of which providing a pulleys triad (3, 4, 5) and **in that**:
- each pulley (3, 4, 5) is mounted on a respective pin (6, 7, 8) which is transversally fixed to one of the two longitudinal elements of the base (1);
- the pulleys (3, 4, 5) of each triad are free to rotate about the respective pins (5, 6, 7) and are arranged to provide two end pulleys (3, 5) and an intermediate pulley (4);
- the end pulleys (3, 5) are identical to each other; the diameter of the intermediate pulley (4) is less than
- the diameter of the end pulleys (3, 5) of the triad;
- a track (9) is mounted on the end pulleys (3, 5) of each triad;
- a belt (10)is mounted on the intermediate pulley (4) and the front pulley (5), said belt being inside the ring delimited by the respective track (9);
- a pad-shaped body (11) is fixed to a respective longitudinal element (2) of the base, said body exerting a pressure against the lower section of the relevant belt (10).

3. Structure according to claim 1 or 2 **characterized in that** said tracks (9) are normally braked.

4. Structure according to claim 3 **characterized in that** for each track (9) a brake is provided, at a point between the rear pulley (3) and the intermediate pulley (4), and it comprises a lever-shaped shoe (28) acting on the inner upper surface of the track, said shoe being pushed upwardly by a spring (29) the load of which is adjustable by means of a screw nut (30) provided on a plate (31) solid to the respective longitudinal element of the base (1) and:
- said shoe (28) is hinged to the element (2) at a point behind the spring (29);
- over the brake shoe (28) there is provided a block (32) solid to the same element (2), i.e. a fixed block, the position of which is such that the track (9) passes between the brake shoe (28) and the same block (32);
- the brake shoe (28) is connected with a braking lever (33) positioned on the handle (14).

5. Structure according to claim 1 **characterized in that** said base (1) is provided with a footrest (34) which automatically is put in the extracted position when the structure configuration changes from the closed to the use configuration.

## Patentansprüche

1. Struktur zum Transportieren von invaliden, verletzten oder behinderten Personen, die eine Basis (1) umfasst, die mit Ketten (9) für eine Vorwärtsbewegung mit verminderter Reibung und einer oberen Struktur ausgerüstet ist, die auf der Basis (1) montiert ist, die zusammenlegbar ist, einen Sitz für eine invalide, eine verletzte oder eine behinderte Person aufweist, der transportiert werden soll, und die unter einem vorgebbaren Winkel bezüglich der Basis (1) positionierbar und in der gewählten Position fest verriegelbar ist, wobei die obere Struktur zwei untere Stützen (12) und zwei obere Stützen (13) aufweist, wobei die oberen Stützen miteinander durch eine horizontale Strebe verbunden sind, die einen Handgriff (14) für eine Bedienungsperson bildet, welche der zu transportierenden Person hilft, **dadurch gekennzeichnet, dass**
- jede der unteren Stützen (12) mit einem entsprechenden Längselement (2) der Basis (1) mit Hilfe eines quer verlaufenden Stiftes (15) verbunden ist, der hinter der vorderen Riemenscheibe (5) angeordnet ist,
- die unteren Stützen (12) mit den oberen Stützen mit Hilfe von zwei Freigabeknöpfen (16) verbunden sind,
- in der Verwendungskonfiguration jede der unteren Stützen (12) koaxial mit der entsprechenden oberen Stütze (13) verläuft,
- in der zusammengefalteten oder geschlossenen Konfiguration jede der unteren Stützen (12) parallel zu der entsprechenden oberen Stütze (13) verläuft, und sich der Handgriffteil (14) in der Nähe der vorderen Riemenscheiben (5) der Basis (1) befindet,
- ein rohrförmiger, U-förmiger Körper (17) mit den unteren Stützen (12) mit Hilfe von quer verlaufenden Stiften (25) gelenkig verbunden ist, wobei der U-förmige Körper auch mit den oberen Stützen (13) mit Hilfe von zwei Stäben (18) verbunden ist,
- die Stäbe (18) an einem Ende mit Hilfe von quer verlaufenden Stiften (19) gelenkig mit dem rohrförmigen Körper (17) verbunden sind, während diese Stäbe an ihrem anderen Ende mit den oberen Stützen (13) gelenkig verbunden sind,
- eine quer verlaufende Stange (20) zwischen den oberen Stützen (13) unterhalb des Handgriffteils (14) montiert ist,
- ein Stück eines textilen Materials (21) an dem rohrförmigen Körper (17) und der Stange (20) befestigt ist und somit einen Sitz und eine Rückenlehne bildet, wobei der Sitz von dem rohrförmigen Körper (17) und die Rückenlehne von der Stange (20) getragen wird, die fest mit den oberen Stützen (13) verbunden ist,
- die unteren Stützen (12) weiterhin mit der Basis (1) mit Hilfe von zwei Gasdruckfedern (23) verbunden sind,
- jede der Gasdruckfedern (23) an einem Ende mit einer entsprechenden unteren Stütze (12) mit Hilfe eines quer verlaufenden Stiftes (24) und am anderen Ende mit einem entsprechenden Längselement (2) der Basis (1) mit Hilfe eines weiteren quer verlaufenden Stiftes (26) verbunden ist,
- die Stifte (24) von der Basis (1) einen größeren Abstand aufweisen als die Stifte (25), mit deren Hilfe das rohrförmige Element (17) mit den unteren Stützen (12) verbunden ist, und sich die Stifte (26) bezüglich der Stifte (15), durch welche die unteren Stützen (12) mit den Längselementen (2) der Basis (1) verbunden sind, in einer weiter hinten liegenden Position befinden, und
- die Gasdruckfedern (23) mit Hilfe eines Hebels (27) gleichzeitig lösbar sind, der am Handgriffteil (14) vorgesehen ist.

2. Struktur nach Anspruch 1, **dadurch gekennzeichnet, dass** die Basis (1) aus zwei Längselementen (2) besteht, die miteinander durch zwei quer verlaufende Elemente (22) verbunden sind, und von denen jedes ein Riemenscheiben-Tripel (3,4,5) aufweist, und dass
- jede Riemenscheibe (3,4,5) auf einem entsprechenden Stift (6,7,8) montiert ist, der quer verlaufend an einem der beiden Längselemente der Basis (1) montiert ist,
- die Riemenscheiben (3,4,5) eines jeden Tripels frei um die entsprechenden Stifte (5,6,7) rotieren können und so angeordnet sind, dass sie zwei End-Riemenscheiben (3,5) und eine dazwischen liegende Riemenscheibe (4) bilden,
- die End-Riemenscheiben (3,5) miteinander identisch sind, während der Durchmesser der dazwischen liegenden Riemenscheibe (4) kleiner ist als der Durchmesser der End-Riemenscheiben (3,5) des Tripels,
- eine Kette (9) auf den End-Riemenscheiben (3,5) eines jeden Tripels montiert ist,
- ein Riemen (10) auf der dazwischen liegenden Riemenscheibe (4) und der vorderen Riemenscheibe (5) montiert ist, wobei sich dieser Riemen innerhalb des von der entsprechenden Kette (9) umschlossenen Ringes befindet,
- ein polsterförmiger Körper (11) an jedem Längselement (2) der Basis befestigt ist, wobei dieser Körper einen Druck gegen den unteren Abschnitt des entsprechenden Riemens (10) ausübt.

3. Struktur nach Anspruch 1 oder 2, **dadurch gekennzeichnet, dass** die Ketten (9) normalerweise gebremst sind.

4. Struktur nach Anspruch 3, **dadurch gekennzeichnet, dass** für jede Kette (9) an einem Punkt zwischen der hinteren Riemenscheibe (3) und der dazwischen liegenden Riemenscheibe (4) eine Bremse vorgesehen ist, die einen hebelförmigen Schuh (28) umfasst, der auf die innere, obere Oberfläche der Kette einwirkt, wobei dieser Schuh durch eine Feder (29) nach oben gedrückt wird, deren Kraft mit Hilfe einer Mutter (30) einstellbar ist, die auf einer Platte (31) vorgesehen ist, die fest mit dem entsprechenden Längselement der Basis (1) verbunden ist, und dass
- der Schuh (28) an dem Element (2) an einem Punkt hinter der Feder (29) angelenkt ist,
- über dem Bremsschuh (28) ein Block (32) vorgesehen ist, der mit dem Element (2) fest verbunden ist, das heißt ein fester Block, dessen Position so gewählt ist, dass die Kette (9) zwischen dem Bremsschuh (28) und dem Block (32) hindurch läuft, und
- der Bremsschuh (28) mit einem Bremshebel (33) verbunden ist, der am Handgriff (14) angeordnet ist.

5. Struktur nach Anspruch 1, **dadurch gekennzeichnet, dass** die Basis (1) mit einer Fußstütze (34) versehen ist, die automatisch in eine ausgezogene Position gebracht wird, wenn sich die Konfiguration der Struktur vom geschlossenen Zustand in den Verwendungszustand ändert.

## Revendications

1. Structure pour le transport des infirmes, infortunés ou handicapés comprenant une base (1) avec des chenilles (9) à friction d'avancement réduite et une superstructure qui est montée sur la même base (1), qui est repliable, qui présente une place pour un infirme, un infortuné ou handicapés à transporter, et qui est positionnable inclinée d'un prédéterminé angle par rapport à la base (1) et elle blocable stablement dans l'orientation choisie, où ladite superstructures comprend deux montants inférieurs (12) et deux montants supérieurs (13), ce derniers étant joints par un trait horizontal (14) qui constitue une poignée pour l'opérateur qui assiste le transporté et:
- les montants inférieurs (12) de ladite superstructure sont reliés chacun avec un respectif élément longitudinal (2) de la base (1) par un perne transversal (15) placé derrière par rapport à la poulie antérieure (5) ;
- les montants inférieurs (12) sont reliées avec les montants supérieurs (13) par deux poignée à déclanchement (16) ;
- dans la configuration d'usage, chaque montants inférieur (12) est coaxiale avec le relatif montant supérieure (13) ;
- dans la configuration plié chaque montants inférieur est parallèle avec le relatif montant supérieure et la poignée de manoeuvre (14) se trouve en proximité des poulies antérieures (5) de la base (1) ;
- un corps tubulaire (17) en forme de « U » est relié aux montants inférieurs (12) par une charnière réalisée par des pernes transversaux (2), ledit corps (17) étant aussi relié aux montants supérieurs (13) par deux tiges (18) ;
- lesdites tiges (18) sont reliées par une charnière réalisée par des pernes transversaux (19), au corps tubulaires (17) à un' extrémité et aux montants supérieurs (13) à l'autre extrémité ;
- entre les deux montants supérieurs (13) est montée une barre transversale (20) en dessous de la poignée (14) ;
- une toile (21) est fixée au corps tubulaire (17) et à la barre (20) formant un siège et un dossier, dont le siège est soutenu par le corps tubulaire (17) et le dossier est soutenu par le barre (20) fixée aux montant supérieurs (13) ;
- les montants inférieurs sont reliés à la base (1) aux moyen aussi de deux ressorts à gaz (23) ;
- chacun desdits ressorts à gaz (23) est relié d'un côté avec un relatif montant inférieur (12) au moyen d'un perne transversal (24) et, de l'autre côté, est relié avec un élément longitudinal (2) de la base (1) au moyen d'un autre perne transversal (26);
- les pernes (24) sont plus éloignés de la base (1) par rapport aux pernes (25) au moyen desquels le corps tubulaire du siège (17) est relié aux montants inférieurs (12) et les pernes (26), sont placés plus en arrière par rapport aux pernes (15) qui relient les montants inférieurs (12) avec les éléments longitudinaux (12) de la base (1) ;
- lesdits ressorts à gaz (23) sont déblocables, simultanément, en agissant sur un levier (27) placé en correspondance de la poignée (14).

2. Structure selon la revendication 1 **caractérisée en ce que** ladite base (1) est réalisée avec deux éléments longitudinaux (2) reliés avec deux élément transversaux (22) sur chacun desquels est montée une triade de poulies (3,4,5) et **en ce que**:
- chaque poulie (3,4,5) est placée sur un relatif perne (6, 7, 8) fixé transversalement à un des deux éléments longitudinaux (2) de la base (1),
- les poulies (3,4,5) de chaque triade sont libre de tourner sur les respectifs pernes (6,7,8), sont disposées de façon à avoir deux poulies d'extrémité (3,5) et une poulie intermédiaire (4) ;
- les poulies d'extrémité (3,5) sont égales entre elles ;
- le diamètre de la poulie intermédiaire (4) est mineur de celui présenté par les deux autres poulies (3,5) de la triade ;
- sur les deux poulies d'extrémité (3,5) de chacune des deux triade de poulies est disposé une chenille (9) ;
- sur la poulie intermédiaire (4) et sur la poulie d'extrémité antérieure (5) est disposée une courroie (10) qui résulte interne à l'anneau formé par la correspondante chenille (9) ;
- sur le trait inférieur de la courroie (10) est fixé un corps (11) formé en guise de patin fixé au relatif élément longitudinal (2) de la base (1).

3. Structure selon les revendications 1 o 2. **caractérisée en ce que** les cités chenilles (9) sont normalement freinées.

4. Structure selon la revendication 3 **caractérisé en ce que** pour chaque chenille (9), un frein est placé entre la poulie postérieure (3) et le poulie intermédiaire (4) et inclus une mâchoire à levier (28) agissante sur la surface supérieure interne de la chenille et qui est poussée vers le haut par un ressort (29) dont la compression peut être réglée à l'aide d'un écru (30) positionné sur une plaque (31) solidaire au respectif élément longitudinal de la base (1) et :
- ladite mâchoire (28) est entablée sur l'élément (2) dans un point (P) placé à l'arrière du ressort (29) ;
- en dessus de la mâchoire (28) est monté un bloc (32) solidaire au même élément (2), c'est-à-dire un bloc fixe, disposé de tel façon que la chenille (9) passe entre la mâchoire (28) et lé bloc (32),
- la mâchoire (28) est reliée à un levier de commande (33) disposé sur la poignée (14).

5. Structure selon la revendication 1 **caractérisé en ce que** la base (1) présente un repose-pied (34) automatiquement extractible quand on passe de la configuration fermée à la configuration d'usage.
